# EUROPÄISCHE PATENTANMELDUNG

(11) **EP 0 779 692 A1**
(43) Veröffentlichungstag der Anmeldung: **18.06.1997**
(21) Anmeldenummer: 96810847.2
(22) Anmeldetag: 04.12.1996
(51) Int. Cl.: H02G 15/105, H01R 4/64

(54) **Verfahren zum Erden einer Abschirmung eines elektrischen Kabels sowie elektrisches Kabel**

(30) Priorität: 13.12.1995 CH 3523/95
(71) Anmelder: Studer Draht-und Kabelwerk AG, 4658 Däniken (CH)
(72) Erfinder: Sarbach, Ewald, 5012 Schönenwerd (CH)
(74) Vertreter: Eder, Carl E.

(57) **Zusammenfassung**

Das Kabel (4) besitzt einen elektrischen Leiter (2), eine Isolationsschicht (5), eine metallische Abschirmung (8) und einen Isolationsmantel (9). Man entfernt einen Abschnitt der Abschirmung (8) und überbrückt die entstehende Lücke elektrisch leitend durch ein Widerstandselement (43). Das letztere hat einen wesentlich grösseren elektrischen Widerstand als die Abschirmung (8). Die Abschirmung (8) wird auf einander abgewandten Seiten des Widerstandselements (13) bei zwei sich in der Nähe der beiden Enden des Kabels (1) befindenden Verbindungsstellen (24) durch Erdungsleitungen (26) dauernd elektrisch leitend mit der Erde verbunden. Das Widerstandselement (13) reduziert den durch die Abschirmung (8) und die Erde fliessenden Induktionssstrom sowie den durch diesen verursachten Leistungsverlust und beeinflusst quer zum Leiter (2) gerichtete elektrische Felder derart, dass keine Entladungen und keine Durchschläge durch die Isolationsschicht (5) stattfinden.

## Beschreibung

Die Erfindung betrifft ein Verfahren zum Erden einer Abschirmung eines elektrischen Kabels, das insbesondere für elektrische Nenn-Spannungen von mindestens 1 kV vorgesehen ist.

Das Kabel ist beispielsweise zum Übertragen von elektrischer Energie mit Nenn-Spannungen von 10 kV bis 50 kV oder eventuell bis 100 kV und mit Nenn-Strömen von mindestens 100 A bis ungefähr 1000 A vorgesehen. Zur Klarstellung sei noch angemerkt, dass beim Übertragen von Dreiphasen-Strom mit der Nenn-Spannung wie üblich die verkettete Spannung, d. h. die zwischen verschiedenen Phasen-Leitern gemessene Spannung gemeint ist.

Bekannte elektrische Kabel für Spannungen von mehr als 10 kV besitzen einen elektrischen Leiter, eine diesen im Querschnitt umschliessende Isolationsschicht, eine diese im Querschnitt umschliessende, elektrisch leitende, metallische Abschirmung und häufig noch andere Schichten. Wenn ein Wechselstrom durch den Leiter eines Kabels fliesst, induziert er in der Abschirmung eine elektrische Induktionsspannung. Um die Gefahr von Unfällen und sonstigen Schäden infolge der in der Abschirmung induzierten Spannung möglichst klein zu halten, wird die Abschirmung häufig bei Verbindungsstellen in der Nähe von beiden Enden des Kabels durch Erdungsleitungen elektrisch leitend mit der Erde verbunden. Da sich die Abschirmung unterbruchslos von der einen zur andern geerdeten Verbindungsstelle erstreckt, erzeugt die in der Abschirmung induzierte Induktionsspannung dann einen Induktionsstrom, der durch die Abschirmung und die Erde fliesst und einen beträchtlichen Verlust der durch das Kabel übertragenen Energie verursacht

Zur Vermeidung derartiger Verluste wird manchmal - insbesondere bei langen Kabeln - eine der beiden eine dauernde leitende Verbindung ergebenden Erdungsleitungen durch eine Erdungsverbindung ersetzt, die einen Überspannungsableiter und einen zu diesem elektrisch parallel geschalteten, bei der normalen Verwendung des Kabels offenen Trennschalter aufweist. Eine Erdungsverbindung mit einem Überspannungsableiter sowie einem Trennschalter erhöht jedoch gegenüber einer die Abschirmung direkt, d. h. dauernd und unterbruchslos elektrisch leitend mit der Erde verbindenden Erdungsleitung die Gefahr eines Unfalls oder eines sonstigen Schadens. Zudem vergrössern solche Apparate sowie ihre Installation die Kosten und auch den Platzbedarf.

Bei Leitungen mit drei zum Leiten von Dreiphasen-Strom dienenden Kabeln ist es ferner bekannt, die Abschirmungen der Kabel in drei Abschnitte zu trennen und diese durch Auskreuzen (englisch: ,,Crossbonding") zyklisch miteinander zu verbinden. Dadurch soll erreicht werden, dass die beim Hindurchleiten von Strömen durch die Leiter der Kabel in den miteinander verbundenen Abschirmungsabschnitten induzierten Spannungen um Phasenwinkel von 120° gegeneinander verschoben sind, die vektorielle Addition der induzierten Spannungen den Wert Null ergibt und keine Ströme durch die Abschirmungen fliessen.

Die EP 0 312 424 A offenbart zum Auskreuzen (,,Crossbonding") von Abschirmungsabschnitten vorgesehene Ka-bel. Die Abschirmungsabschnitte sind bei den für das Auskreuzen vorgesehenen Stellen mit elektrischen Anschlüssen zum Anschliessen von nicht beschriebenen Verbindungsleitungen versehen, die vom Kabel weg zur Abschirmung eines anderen Kabels führen. Bei den in den Figuren 1 und 2 der EP 0 312 424 A dargestellten Kabeln sind diese bei oder in der Nähe einer zum Auskreuzen vorgesehenen Stelle aus zwei Kabelteilen zusammengesetzt, deren Leiter miteinander verbunden und bei der Verbindungsstelle durch eine neue Isolation isoliert werden. Das Verbinden von Kabelteilen und Aufbauen einer für Spannungen von mehr als etwa 10 kV verwendbaren Isolation ist jedoch heikel, zeitraubend und kostspielig. Dabei besteht insbesondere auch eine grosse Gefahr, dass beim Aufbauen der neuen Isolation in und/oder unter dieser Gasblasen entstehen, die beim Hindurchleiten von Strom durch das Kabel stellenweise hohe elektrische Feldstärken, Entladungen und eine Zerstörung des Kabels verursachen können. Bei dem in der Fig. 3 der EP 0 312 424 dargestellten Kabel wird dessen Isolationsschicht zum Auskreuzen zwar offenbar am Kabel belassen. Das Auskreuzen hat jedoch immer noch die Nachteile, dass die zum Auskreuzen nötigen, elektrischen Verbindungen wegen der hohen Spannungen viel Platz benötigen, aufwendig sind und die Gefahr eines Unfalls oder sonstigen Schadens erhöhen. Das Auskreuzen wird daher in der Praxis nur relativ selten und meistens nur für Nenn-Spannungen oberhalb etwa 50 kV angewendet. Zudem ist das Auskreuzen nur bei drei parallel nebeneinander verlaufenden Kabeln zum Leiten von Dreiphasen-Strom, nicht aber für einzelne Kabel möglich.

Die FR 2 657 472 A offenbart die Durchführung von Kabeln durch eine elektrisch leitende Wand. Jedes dieser Kabel besitzt eine metallische Abschirmung, die bei der Durchführung durch eine Verbundmasse elektrisch leitend mit der Wand verbunden ist. Die Abschirmung erstreckt sich jedoch unterbruchslos durch die Durchführung hindurch, so dass die leitende Verbundmasse eventuell über die Wand eine (zusätzliche) Erdung der Abschirmung ergibt, aber die durch Induktion einer Spannung in der Abschirmung entstehenden Verluste nicht reduziert.

Der Erfindung liegt daher die Aufgabe zugrunde ein Verfahren zu schaffen, mit dem Nachteile der bekannten Verfahren zum Erden der Abschirmung eines Kabels vermieden werden können. Dabei soll insbesondere ausgehend von dem in der Fig. 3 der EP 0 312 424 A ersichtlichen Kabel ermöglicht werden, dass die bzw. jede Abschirmung bei Verbindungsstellen in der Nähe von beiden Enden des Kabels während der Verwendung des Kabels dauernd elektrisch leitend mit der Erde verbunden werden kann und trotzdem ohne Auskreuzen von Abschirmungsabschnitten nur möglichst kleine Energieverluste durch Induktionsströme in der Abschirmung entstehen. Das Verfahren soll zudem wirtschaftlich durchführbar sein und eine hohe Sicherheit gegen Unfälle und sonstige Schäden geben.

Diese Aufgabe wird gemäss der Erfindung durch ein Verfahren mit den Merkmalen des Anspruchs 1 gelöst.

Die Erfindung betrifft ferner ein elektrisches Kabel, das gemäss der Erfindung die Merkmale des Anspruchs 12 aufweist.

Vorteilhafte Weiterbildungen des Verfahrens und des Kabels gehen aus den abhängigen Ansprüchen hervor.

Bei einem Kabel der interessierenden Art ist der bzw. jeder Leiter im Querschnitt vorzugsweise von innen nach aussen der Reihe nach von einer inneren Halbleiterschicht, einer Isolationsschicht, einer äusseren Halbleiterschicht, einer Abschirmung und einem Isolationsmantel umhüllt. Die innere Halbleiterschicht soll dabei mindestens stellenweise elektrisch leitend mit dem Leiter verbunden sein. Die äussere Halbleiterschicht soll mindestens stellenweise elektrisch leitend mit der Abschirmung verbunden sein. Im übrigen sei zu den Halbleiterschichten noch angemerkt, dass diese - wie noch näher beschrieben wird - nach der allgemeinen physikalischen Terminologie nicht aus Halbleitermaterial bestehen, jedoch bei Kabeln üblicherweise als Halbleiter bezeichnet werden, weil sie einen wesentlich höheren, spezifischen elektrischen Widerstand und auch einen wesentlich höheren elektrischen Widerstand pro Längeneinheit sowie Gesamt-Widerstand haben als der metallische Leiter und die metallische Abschirmung.

Das Widerstandselement kann zum Beispiel aus einer Widerstandsmaterial-Schicht gebildet sein, welche sowohl einen entfernten Abschnitt der äusseren Halbleiterschicht als auch einen entfernten Abschnitt der Abschirmung ersetzt und überbrückt. Die das Widerstandselement bildende Widerstandsmaterial-Schicht kann beispielsweise an beiden Enden einen Abschnitt der Abschirmung überlappen und beim Überdeckungsbereich direkt elektrisch leitend mit der Abschirmung verbunden sein. Eventuell kann die Widerstandsmaterial-Schicht jedoch auch Abschnitte der Halbleiterschicht überlappen und über diese elektrisch leitend mit der Abschirmung verbunden sein.

Es besteht auch die Möglichkeit, zur Bildung des Widerstandselements einen Abschnitt der metallischen Abschirmung zu entfernen und die äussere Halbleiterschicht oder mindestens deren innerste Teilschicht unter der dabei entstehenden Lücke der Abschirmung zu belassen. Das Widerstandselement kann dann durch den bei der Lücke der Abschirmung vorhandenen Abschnitt der äusseren Halbleiterschicht gebildet sein.

Zur Klarstellung sei angemerkt, dass unter dem elektrischen Widerstand des Widerstandselements der Widerstand des einen Abschnitt der Abschirmung ersetzenden und die in der letzteren vorhandene Lücke überbrückenden Abschnitts des Widerstandselements verstanden wird. Der elektrische Widerstand des Widerstandselements ist gemäss der Erfindung grösser sowie vorzugsweise wesentlich grösser als der Widerstand der Abschirmung und zwar sowohl grösser als der Widerstand der ursprünglich vorhandenen als auch grösser als der Widerstand der verbleibenden Abschirmung. Wenn ein Wechselstrom durch den Leiter fliesst und in der Abschirmung eine Spannung induziert, kann dann nur ein sehr kleiner Strom durch die Abschirmung und das Widerstandselement fliessen, so dass die Abschirmung nur geringe Verluste der durch den Leiter übertragene Energie verursacht.

Das Widerstandselement kann bereits von der das Kabel her-stellende Firma an einer von der das Kabel dann verwendenden und verlegenden Firma gewünschten Stelle des Kabels angeordnet werden. Stattdessen kann erst die das Kabel verwendende und verlegende Firma das Kabel an der gewünschten Stelle mit einem Widerstandselement ausrüsten. Im letzteren Fall kann die Herstellerin des Kabels dann auch die zur Bildung und Isolation des Widerstandselements nötigen Materialien an die das Kabel verlegende Firma liefern.

Vorzugsweise sind zwischen der Innenfläche der Isolations-schicht und der inneren Halbleiterschicht, zwischen der Aus-senfläche der Isolationsschicht und der äusseren Halbleiterschicht sowie zwischen der Aussenfläche der Isolationsschicht und dem Widerstandselement keine oder höchstens sehr kleine, mikroskopische Luftblasen oder sonstige Hohlräume vorhanden. Unter sehr kleinen, mikroskopischen Luftblasen oder sonstigen Hohlräumen werden dabei Luftblasen oder sonstige Hohlräume verstanden, deren maximale Abmessungen weniger als ungefähr 10 Mikrometer betragen. Die innere Halbleiterschicht, die äussere Halbleiterschicht und das durch eine zusätzliche Widerstandsmaterial-Schicht oder einen Abschnitt der Halbleiterschicht gebildete Widerstandselement verhindern, dass bei der Verwendung des Kabels auf der Innenfläche und der Aussenfläche des Isolationsmantels Teil-Entladungen (kleine Entladungen) stattfinden. Die Halbleiterschichten und das Widerstandselement beeinflussen daher bei der Verwendung des Kabels das quer zum Leiter gerichtete elektrische Feld derart und halten die elektrische Feldstärke so niedrig, dass keine Funkenentladungen und keine Durchschläge durch die Isolationsschicht stattfinden.

Das Kabel ist zum Beispiel für die schon angegebenen Bereiche der Nenn-Spannung und des Nenn-Stroms vorgesehen und hat zum Beispiel eine Länge von 100 m bis 3 km. Die Querschnittsfläche des bzw. jedes Leiters des Kabels kann dann etwa im Bereich von 10 mm² bis etwa 800 mm² liegen. Der elektrische Widerstand der Abschirmung eines Kabels für den genannten Nenn-Spannungsbereich und Nenn-Strombereich beträgt zum Beispiel etwa 0,1 Ohm bis 1 Ohm pro Kilometer. Der Widerstand der metallischen Abschirmung des ganzen Kabels beträgt vorzugsweise höchstens 10 Ohm und normalerweise weniger.

Wenn ein Strom mit einem im genannten Nenn-Strombereich liegenden Wert durch ein derartiges Kabel fliesst, induziert er in der Abschirmung typischerweise eine Induktionsspannung bis etwa 25 V pro Kilometer Länge des Kabels. Bei Schaltvorgängen können in der Abschirmung kurzzeitig - beispielsweise während einiger Mikrosekunden - Spannungen entstehen, die bis etwa 50 kV betragen. Bei Kurzschlüssen können kurzzeitig - beispielsweise während einer Zeitdauer bis 0,5 s - Spannungen bis etwa 3 kV pro km Länge des Kabels in der Abschirmung induziert werden. Ferner können bei allfälligen Blitzeinschlägen in der Abschirmung Spannungen bis etwa 50 kV auftreten.

Der spezifische elektrische Widerstand des Widerstandselementes soll zweckmässigerweise wesentlich kleiner, vorzugsweise mindestens 1000-mal und besser mindestens 10⁶-mal kleiner sein als derjenige der zwischen dem Leiter und der Abschirmung vorhandenen Isolationsschicht. Der spezifische elektrische Widerstand des Widerstandselements ist ferner vorzugsweise wesentlich grösser als derjenige der metallischen Abschirmung. Das Widerstandselement kann beispielsweise eine elektrisch isolierende Matrix und in dieser eingebettete, verteilte elektrisch leitende Teilchen aufweisen. Die Dielektrizitätskonstante des Widerstandselements ist vorzugsweise mindestens gleich der Dielektrizitätskonstante der zwischen dem Leiter und der Abschirmung vorhandenen Isolationsschicht. Dies trägt zu einer günstigen Verteilung des elektrischen Feldes bei.

Die Isolationsschicht kann aus einem thermoplastischen Kunststoff, zum Beispiel aus Polyäthylen bestehen, das einen spezifischen elektrischen Widerstand von ungefähr 10¹⁸ Ω cm und eine Dielektrizitätskonstante von ungefähr 2,3 hat. Zur letzteren ist anzumerken, dass praktisch alle anderen, gegenwärtig bekannten, festen, identisch isolierenden Materialien höhere Dielektrizitätskonstanten haben. Wenn die Isolationsschicht aus Polyäthylen besteht, ist die Dielektrizitätskonstante des Widerstandselementes daher für ein beliebig ausgebildetes Widerstandselement praktisch zwangsläufig mindestens gleich der Dielektrizitätskonstante der Isolationsschicht und meistens grösser als die letztgenannte Dielektrizitätskonstante.

Der Leiter und die Isolationsschicht, die vorzugsweise vorhandenen Halbleiterschichten, die Abschirmung, der diese vorzugsweise umschliessende Isolationsmantel und das Widerstandselement sind vorzugsweise im Querschnitt mindestens im allgemeinen kreisförmig. Die Isolationsschicht und die Abschirmung haben dann im Querschnitt einen äusseren Durchmes-ser. Die Länge der vom Widerstandselement überbrückten Lücke der Abschirmung ist vorzugsweise mindestens gleich dem äusseren Durchmesser der Isolationsschicht und/oder der Abschirmung, besser mindestens gleich dem zweifachen und beispielsweise mindestens gleich dem dreifachen, äussern Durchmesser der Isolationsschicht und/oder der Abschirmung. Die äusseren Durchmesser der Isolationsschicht und der Abschirmung können beispielsweise im Bereich von etwa 15 mm bis 50 mm liegen. Die Länge des Widerstandselements oder - genauer gesagt - die Länge des einen Abschnitt der metallischen Abschirmung ersetzenden Abschnitts des Widerstandselements ist vorzugsweise wesentlich kürzer als die Länge des Kabels und die Länge der verbleibenden metallischen Abschirmung und beträgt vorzugsweise höchstens 5 m, besser höchstens 1 m sowie vorzugsweise höchstens 1% der Länge des Kabels. Die genannte Länge beträgt ferner zweckmässigerweise mindestens 3 cm vorzugsweise mindestens 5 cm und zum Beispiel 10 cm bis 20 cm oder bis ungefähr 30 cm.

Der elektrische Widerstand pro Längeneinheit des Widerstandselements ist zweckmässigerweise mindestens 100-mal grösser und noch besser mindestens 1000-mal grösser als der elektrische Widerstand pro Längeneinheit der Abschirmung. Der Widerstand des Widerstandselements beträgt vorzugsweise mindestens 100 Ohm, besser mindestens 100 Kiloohm und noch besser mindestens 1 Megaohm. Der Widerstand des Widerstandselements kann dabei derart an die Nenn-Spannung, den Nenn-Strom und die Länge des Kabels angepasst werden, dass die von dem durch die Abschirmung und die Erde fliessenden Induktionsstrom verursachte Verlustleistung höchstens 10% der im Leiter entstehenden Verlustleistung beträgt und vorzugsweise wesentlich kleiner als 1% der letztgenannten Verlustleistung ist.

Die Abschirmung des Kabels wird bei zwei Verbindungsstellen, von denen sich jede mindestens annähernd bei einem der beiden Enden des Kabels befindet, elektrisch leitend mit der Erde verbunden. Dabei können bei beiden Verbindungsstellen feste, elektrisch dauernd leitende Erdverbindungen gebildet werden, d.h. Erdverbindungen ohne in diesen vorhandene Überspannungsleiter und ohne die letzteren überbrückende Trennschalter. Die Abschirmung und das Widerstandselement brauchen zwischen diesen Verbindungsstellen mit keinen Anschlüssen und mit keinen anderen vom Kabel wegführenden, elektrisch leitenden Verbindungen versehen und/oder verbunden zu werden. Es ist also insbesondere auch nicht nötig, Längsabschnitte der Abschirmung durch zyklisches Auskreuzen (,,Crossbonding") mit Abschirmungsabschnitten anderer Kabel zu verbinden. Die Abschirmung und das Widerstandselement können daher zwischen den beiden Verbindungsstellen entlang dem Kabel unterbruchslos gegen die Umgebung des Kabels elektrisch isoliert bleiben und/oder werden.

Da beim erfindungsgemässen Kabel kein Auskreuzen der durch eine Lücke getrennten Abschirmungsabschnitte nötig ist, kann das erfindungsgemässe Kabel sehr gut als einzelnes Kabel zum Leiter einer einzelnen Stromphase verwendet werden. Erfindungsgemässe Kabel sind jedoch auch zum Leiten von Dreiphasen-Strom verwendbar. Dazu können drei erfindungsgemässe Kabel zu einem dreiadrigen Mehrfach-Kabel mit einem gemeinsamen Mantel zusammengefasst oder separat nebeneinander angeordnet werden. Die Abschirmungen der drei zum Leiten von Dreiphasen-Strom dienenden Kabel werden dann höchstens bei den sich an ihren Enden befindenden, geerdeten Verbidungsstellen miteinander verbunden und können zwischen diesen - wie auch die Widerstandselemente - überall gegeneinander elektrisch isoliert sein.

Der spezifische elektrische Widerstand, der gesamte elektrische Widerstand, die Dielektrizitätskonstante, die Dicke und die Länge des Widerstandselements können derart an die Ausbildung sowie Abmessungen des Kabels, die vorgesehene Nenn-Spannung, den vorgesehenen Nenn-Strom und die bei Schaltvorgängen, Kurzschlüssen sowie allfälligen Blitzeinschlägen in der Abschirmung erwarteten Spannungen und den über dem Widerstandselement entstehenden Spannungsabfall angepasst werden, dass das Widerstandselement nie überhitzt wird und dass weder das Widerstandselement noch andere Teile des Kabels durch Entladungen beschädigt werden.

Die erfindungsgemässe Ausrüstung des Kabels mit einem Widerstandselement ermöglicht also, die infolge von Induktionsströmen durch die Abschirmung auftretenden Leistungsverluste sehr niedrig zu halten und praktisch zu eliminieren sowie gleichzeitig eine hohe Sicherheit zu erzielen. Das Ausrüsten des Kabels mit einem Widerstandselement verursacht zudem nur einen geringen Arbeitsaufwand und nur geringe Kosten. Dabei trägt es sehr wesentlich zur Tiefhaltung der Kosten und zur breiten Verwendbarkeit des Kabels bei, dass kein zyklisches Auskreuzen der Abschirmung des Kabels nötig ist.

Der Erfindungsgegenstand wird nachfolgend anhand in der Zeichnung dargestellter Ausführungsbeispiele näher erläutert. In der Zeichnung zeigt
die Fig. 1 eine Schrägansicht von einem Stück eines Kabels,
die Fig. 2 einen Längsschnitt durch einen Abschnitt eines Kabels und einer über dieses geschobenen, zum Aufschrumpfen auf das Kabel bestimmten Manschette,
die Fig. 3 einen Längsschnitt durch den in der Fig. 2 ersichtlichen Abschnitt des Kabels mit aufgeschrumpfter Manschette und mit einem Teil eines Kabelendverschlusses,
die Fig. 4 einen Querschnitt durch das Kabel und die auf dieses aufgeschrumpfte Manschette entlang der Linie IV - IV der Fig. 3, aber in grösserem Maßstab als diese,
die Fig. 5 eine Seitenansicht des Kabels,
die Fig. 6 einen zur Fig. 4 analogen Längsschnitt durch einen Abschnitt eines Kabels, bei welchem das Widerstandselement durch einen Abschnitt einer Halbleiterschicht des Kabels gebildet ist,
die Fig. 7 einen Längsschnitt durch einen Abschnitt eines Kabels und ein Band zur Bildung eines Widerstandselements,
die Fig. 8 einen Längsschnitt durch den in der Fig. 7 ersichtlichen Kabelabschnitt, aber nach Bildung des Widerstandselements und
die Fig. 9 einen Querschnitt durch ein dreiadriges Mehrfach-Kabel.

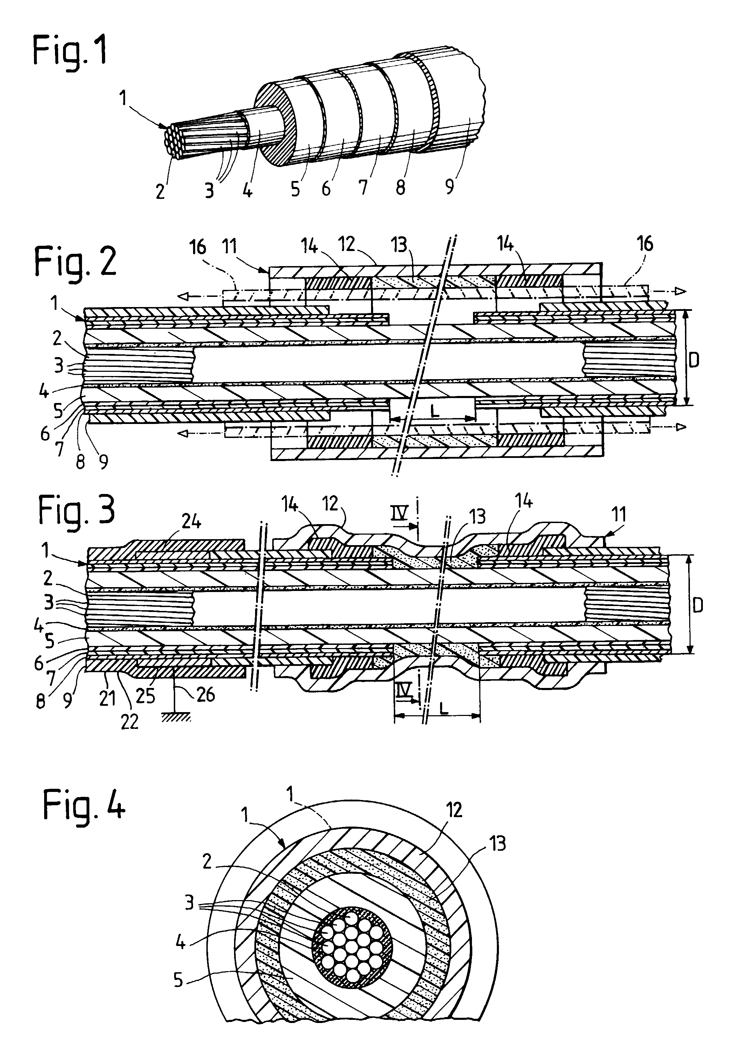

Des in den Figuren 1 bis 5 ersichtliche, einadrige, elektrische Kabel 1 besitzt einen elektrisch leitenden, metallischen Leiter 2. Dieser ist durch mehrere miteinander verseilte bzw. verdrillte, beispielsweise aus Kupfer bestehende Drähte 3 gebildet und im Querschnitt im allgemeinen ungefähr kreisförmig. Der Leiter 2 ist im Querschnitt - der Reihe nach von innen nach aussen - von in einer inneren Halbleiterschicht 4, einer Isolationsschicht 5, einer Halbleiter-Teilschicht 6, einer Halbleiter-Quellhülle 7, einer Abschirmung 8 und einem Isolationsmantel 9 umhüllt. Die Halbleiter-Teilschicht 6 und die Halbleiter-Quellhülle 7 bilden zusammen die äussere Halbleiterschicht 6, 7.

Die Drähte 3 sind schematisch mit kreisförmigem Querschnitt gezeichnet, können jedoch mehr oder weniger sechseckförmige Querschnittsformen haben, so dass sie im Querschnitt ein mindestens weitgehend hohlraumfreies Bündel bilden. Die innere Halbleiterschicht 4 liegt an den äussersten Drähten 3 an, ist elektrisch leitend mit dem Leiter 2 verbunden und ragt eventuell ein wenig zwischen die äussersten Drähte 3 hinein. Die Aussenfläche der inneren Halbleiterschicht 4 und die Innen- sowie Aussenflächen der Teile 5, 6, 7, 8, 9 des Kabels sind im Querschnitt mindestens annähernd sowie vorzugsweise genau kreisförmig und bei gerade verlaufendem Kabel zylindrisch. Ferner liegen die einander zugewandten Flächen der Teile 5 paarweise überall lückenlos aneinander an. Die Halbleiterschicht 4 und die Halbleiter-Teilschicht 6 bestehen beispielsweise aus einer elektrisch isolierenden Matrix aus einem thermoplastischen Kunststoff - wie Äthylenvinylacetat - und in der Matrix dispergierten, elektrisch leitenden kornförmigen Kohlenstoffteilchen. Die Isolationsschicht 5 ist elektrisch isolierend und besteht zum Beispiel aus Polyäthylen. Die Halbleiter-Quellhülle 7 ist zum Beispiel durch ein wendelförmig um die Halbleiter-Teilschicht 6 herumgewickeltes Band gebildet. Dieses besteht zum Beispiel aus einem Vliessstoff, der aussen und/oder innen mit einer Kunststoffschicht versehen ist, in der Kohlenstoffteilchen dispergiert sind. Die bzw. mindestens eine auf dem Band vorhandene Kunststoffschicht ist ferner mit hygroskopischen Kunststoffteilchen, nämlich Kunststoff-Flocken versehen, die bei der Herstellung des Bandes durch Beflockung auf dieses aufgebracht wurde. Die Halbleiter-Teilschicht 6 ist durch die Halbleiter-Quellhülle 7 mindestens stellenweise elektrisch leitend mit der Abschirmung 8 verbunden.

Die Abschirmung 8 ist elektrisch leitend und besteht aus mindestens einem metallischen Material. Die Abschirmung 8 ist vorzugsweise durch ein dünnwandiges, biegbares Rohr bzw. einen Schlauch mit einem kompakten, d. h. lochfreien, die ganze Fläche der Quellhülle 7 bedeckenden Mantel aus Aluminium und/oder Kupfer gebildet. Die Abschirmung 8 hat einen äusseren Durchmesser D. Der äussere Isolationsmantel 9 ist elektrisch isolierend und besteht vorzugsweise aus einem thermoplastischen, hochzähen Kunststoff, zum Beispiel aus einem Polyäthylen- und/oder Polyamid-Derivat.

Für die Bildung und Verwendung des Kabels 1 wird zuerst ein Kabel mit den Teilen 1 bis 9 hergestellt. Danach wird ein Kabelstück abgeschnitten, dessen Länge ungefähr gleich oder etwas grösser als die Länge des schliesslich benutzten Kabels 1 ist. Die den Leiter 2 umhüllenden Teile 4, 5, 6, 7, 8, 9 erstrecken sich dann unterbruchslos über die ganze Länge des Kabels 1. Für dessen Verwendung werden nun Längsabschnitte des Isolationsmantels 9, der Abschirmung 8 sowie der äusseren Halbleiterschicht 6, 7 entfernt. Dabei gelangt das Kabel 1 in den in der Fig. 2 dargestellten Zustand. Das Kabel hat dann einen sich zwischen seinen beiden Enden und in Abstand von diesen befindenden Längsabschnitt, in welchem die Aussenfläche der Isolationsschicht 5 um deren ganzen Umfang herum freigelegt und die äussere Halbleiterschicht 6, 7, die Abschirmung 8 und der Isolationsmantel 9 unterbrochen sind. Der freigelegte Abschnitt der Isolationsschicht 5 und die Lücken zwischen den verbleibenden Abschnitten der Halbleiterschicht 6, 7, der Abschirmung 8 sind zum Beispiel alle gleich lang und haben die Länge L. Die Lücke zwischen den verbleibenden Abschnitten des Isolationsmantels 9 ist vorzugsweise etwas länger als die Lücke zwischen den verbleibenden Abschnitten der Abschirmung 8, so dass die Abschirmung 8 bei beiden Enden des freigelegten Abschnitts der Isolationsschicht 5 einen kurzen, freigelegten sowie blanken, d. h. nicht vom Isolationsmantel 9 bedeckten Abschnitt hat.

Ferner ist eine dem Kabel 1 zugeordnete Manschette 11 vorhanden. Die Manschette 11 weist aussen eine an beiden Enden offene, elektrisch isolierende, kalt oder heiss schrumpfbare, vor dem Schrumpfen im wesentlichen hohlzylindrische, elektrisch isolierende Hülle 12 auf. Die Manschette 11 weist ferner ein in der Hülle 12 angeordnetes, an deren Innenfläche anliegendes, hülsenförmiges vor dem Schrumpfen der Hülle ebenfalls im wesentlichen hohlzylindrisches, elektrisches Widerstandselement 13 auf. In der Hülle 12 ist bei jedem Ende des Widerstandselements 13 noch eine elektrisch isolierende, ringförmige Dichtung 14 vorhanden, die an der Innenfläche der Hülle anliegt und vor dem Schrumpfen der Hülle 12 ebenfalls ungefähr hohlzylindrisch ist.

Das Widerstandselement 13 und die beiden Dichtungen 14 erstrecken sich entlang dem ganzen Umfang der Innenfläche der Hülle 12. Die Länge des Widerstandelements 13 ist mindestens gleich der Länge L, vorzugsweise grösser als diese und zum Beispiel ungefähr gleich der Länge des Unterbruchs des Isolationsmantels 9. Die Hülle 12 hat eine Länge, die grösser ist als die Summe der Längen des Widerstandselements 13 und der beiden Dichtungen 14. Die Hülle 12 ragt bei beiden Enden über das Widerstandselement 13 und die beiden Dichtungen 14 hinaus.

Die Hülle 12 besteht vorzugsweise im wesentlichen aus einem thermoplastischen Kunststoff, zum Beispiel Polyäthylen, Äthylenvinylacetat oder fluorhaltigem Silikon oder eventuell aus einem Naturkautschuk enthaltenden Material. Das Widerstandselement 13 besteht aus einem Widerstandsmaterial. Dieses ist mindestens vor dem Schrumpfen der Hülle 12 plastisch deformierbar und fliessfähig, aber sehr viskos. Das Widerstandsmaterial befindet sich vor dem Schrumpfen der Hülle vorzugsweise im Zustand einer zähflüssigen Paste oder eines Kitts. Das Widerstandsmaterial besteht beispielsweise aus einer elektrisch isolierenden Matrix, in der elektrisch leitende Teilchen enthalten und gleichmässig dispergiert sind. Die Matrix enthält zum Beispiel als Basisbestandteil einen thermoplastischen Kunststoff. Die elektrisch leitenden Teilchen bestehen zum Beispiel aus kornförmigen, rundlichen und/oder ekkigen und/oder eventuell länglichen Kohlenstoffteilchen. Die Dichtungen 14 bestehen zum Beispiel aus einem mindestens vor dem Schrumpfen der Hülle 12 plastisch deformierbaren und fliessfähigen Dichtungsmaterial.

Wenn die Hülle kalt schrumpfbar ist, kann sie zum Beispiel gummielastisch und derart vorgespannt sein, dass sie bestrebt ist, sich im Querschnitt zu kontrahieren. Die Manschette 11 enthält dann vor dem Schrumpfen der Hülle mindestens ein Stützelement 16 und zum Beispiel zwei in der Fig. 2 schematisch und strichpunktiert angedeutete Stützelemente 16. Diese stützen die Manschette 11 und halten diese in dem in der Fig. 2 gezeichneten Zustand, so dass die Manschette 11 zusammen mit den Stützelementen leicht auf das Kabel geschoben werden kann. Die beiden Stützelemente besitzen beispielsweise je eine aus einem Band bestehende, wendelförmige Feder und eine auf deren Aussenseite angeordnete, zylindrische, glatte Gleithülle. Zum Schrumpfen der Hülle 12 können die beiden Stützelemente zum Beispiel - wie es in der Fig. 2 durch Pfeile angedeutet ist, in einander abgewandten Richtungen aus der Hülle 12 herausgezogen werden. Die Hülle 12 wird dabei kalt - d. h. bei normaler Raumtemperatur ohne Erwärmung - geschrumpft, wobei sie sich infolge ihrer Vorspannung zusammenzieht.

Wenn die Hülle 12 heiss - d. h. mit Heissluft - schrumpfbar ist, brauchen keine Stützelemente vorhanden zu sein.

Die Manschette 11 wird zum Verbinden mit dem Kabel 1 auf dieses in die in der Fig. 2 gezeichnete Stellung geschoben. Dann wird die Hülle 12 durch Herausziehen der allenfalls vorhandenen Stützelemente 16, 17 kalt oder durch Erhitzen mit einem Heissluftstrom heiss geschrumpft. Die Manschette 11 gelangt dabei in den in der Fig. 3 gezeichneten Zustand. Das aus fliessfähigem Widerstandsmaterial gebildete Widerstandselement 13 wird beim Schrumpfen derart deformiert, dass es im wesentlichen blasenfrei an der Aussenfläche des vorher freigelegten Abschnitt der Isolationsschicht 5 und auch an Aussenflächenabschnitten der freigelegten Abschnitte der Abschirmung 8 anliegt und die letztgenannten Abschnitte des Isolationsmantels 5 sowie der Abschirmung 8 im Querschnitt umschliesst. Das Widerstandselement 13 ist dann auf beiden Seiten der in der Abschirmung 8 vorhandenen Lücke entlang dem ganzen Umfang der Abschirmung 8 elektrisch leitend mit dieser verbunden. Das Widerstandselement 13 verbindet die beiden verbleibenden Abschnitte der metallischen Abschirmung 8 elektrisch leitend miteinander und überbrückt also die zwischen diesen Abschirmungs-Abschnitten vorhandene Lücke elektrisch leitend. Zudem schirmt das Widerstandselement 13 den Leiter 2 im Bereich der in der metallischen Abschirmung 8 vorhandenen Lücke um den ganzen Umfang des Leiters herum elektrisch ab. Die Hülle 12 deckt die vorher freigelegten Abschnitte der äusseren Halbleiterschicht 6, 7 sowie der Abschirmung 8 und das Widerstandselement 13 gegen aussen vollständig ab und isoliert die vorher freigelegten Abschnitte der äusseren Halbleiterschicht 6, 7 sowie der Abschirmung 8 und das Widerstandselement 13 elektrisch gegen die Umgebung des Kabels. Die über die Dichtungen 14 herausragenden Endabschnitte der geschrumpften Hülle 12 liegen dann aufeinander abgewandten Seiten der Unterbrüche der Abschirmung 8 und des Isolationsmantels 9 fest am letzteren an und umschliessen diesen im Querschnitt. Die aus fliessfähigem Dichtungsmaterial bestehenden, ringförmigen Dichtungen 14 verbinden die Hülle 12 in der Nähe von deren Enden dicht mit dem Isolationsmantel 9 und/oder der Abschirmung 8 und dichten den die freigelegten Abschnitte der Abschirmung 8 sowie des Widerstandselement 13 enthaltenden Innenraumbereich der Hülle 12 gegen die Umgebung des mit der Manschette 11 versehenen Kabels 1 ab. Die Hülle 12 wird vorzugsweise derart geschrumpft, dass in dem von der Hülle 12 im Querschnitt umschlossenen Raum im Längsbereich, in dem die Abschirmung 8 unterbrochen wurde, keine oder höchstens sehr kleine Hohlräume und/oder Luftblasen vorhanden sind.

Die vor dem Schrumpfen fliessfähigen, zur Bildung des Widerstandselementes 13 und der Dichtungen 14 dienenden Materialien können sich nach dem Aufschrumpfen der Hülle 12 auf das Kabel 1 eventuell mehr oder weniger stark verfestigen. Die Hülle 12, des Widerstandselement 13 und insbesondere die Dichtungen 14 bleiben jedoch vorzugsweise elastisch deformierbar, so dass das Kabel 1 auch im Bereich der Manschette 11 noch biegbar bleibt.

Im übrigen sei noch angemerkt, dass die verschiedenen Figuren teilweise nicht massstäblich gezeichnet sind, wobei insbesondere die Halbleiterschichten 4 sowie 6, 7 und vor allem auch die zum Beispiel aus einem sehr dünnwandigen Rohr bestehende Abschirmung 8 im Vergleich zu den Durchmessern des Leiters 2, der Isolationsschicht 5 und des Isolationsmantels 9 mit übertriebenen Dicken gezeichnet sind. Ferner kann die Materialdicke des Widerstandselements 13 im Vergleich zu seinem Durchmesser kleiner sein, als es in den Figuren 2 bis 4 gezeichnet ist.

Vor oder nach dem Befestigen der Manschette 11 am Kabel 1 entfernt man an beiden Enden von diesem einen Abschnitt des Isolationsmantels 9 und einen etwas kürzeren Abschnitt der Abschirmung 8 und der äusseren Halbleiterschicht 6, 7. Des weiteren wird an beiden Enden des Kabels ein Abschnitt des Leiters 2 freigelegt und mechanisch sowie elektrisch mit einem Anschluss 19 verbunden, der zum Beispiel aus einem Kabelschuh besteht. Die Abschirmung 8 hat zwischen den dem Anschluss 19 und dem Ende des Isolationsmantels 9 einen kurzen freigelegten Verbindungsabschnitt. Die beiden Verbindungsabschnitte bilden Verbindungsstellen 24 und Erdungsanschlüsse, bei denen die Abschirmung 8 durch ein Verbindungselement 25 - beispielsweise eine Bride - fest elektrisch leitend mit einer Erdungsleitung 26 verbunden wird. Ferner wird an beiden Endabschnitten des Kabels ein Endverschluss 21 angebracht. Dieser besitzt eine elektrisch isolierende Hülle 22 aus Kunststoff, die kalt oder heiss auf das Kabel aufgeschrumpft wird. Die Hülle 22 jedes Endverschlusses 21 liegt dann mit einem Ende am Anschluss 19 und mit dem anderen Ende an einem Endabschnitt der Aussenfläche des Isolationsmantels 9 an. Die Hülle 22 des nur vereinfacht gezeichneten Endverschlusses 21 umhüllt das Verbindungselement 24, enthält unter anderem noch nicht gezeichnete Dichtungsmittel und schliesst den Endabschnitt des Kabels sowie auch das Verbindungselement 24 dicht gegen die Umgebung des Kabels ab. Die Erdungsleitung 26 verbindet die Abschirmung 8 bei beiden sich annähernd bei den Enden der Abschirmung und auch annähernd bei den Enden des ganzen Kabels 1 befindenden Verbindungsstellen 24 dauernd sowie unterbruchslos elektrisch leitend mit der Erde.

Die Manschette 11 wird vorzugsweise in der Nähe von einem der Enden des Kabel angeordnet, so dass die Manschette 11 zum Aufschrumpfen nur eine relativ kurze Strecke auf das Kabel aufgeschoben werden muss. Ferner befindet sich die Manschette vorzugsweise bei einem geraden Abschnitt des Kabels. Da die unmittelbar an die Anschlüsse 19 anschliessenden Abschnitte eines Kabels in der Praxis häufig gebogen sind , wird die Manschette 11 nötigenfalls in einem bis einige Meter betragenden Abstand von einem der Enden des Kabels angeordnet. Die Länge L der Lücke in der Abschirmung 8 und des diese Lücke überbrükkenden Abschnitts des Widerstandselementes 13 beträgt zum Beispiel 5 cm bis 20 cm. Der elektrische Widerstand des Widerstandselements 13 oder - genauer gesagt - des den entfernten Abschnitt der Abschirmung 8 ersetzenden, die Länge L aufweisenden Abschnitts des Widerstandselementes beträgt zum Beispiel 1 Megaohm bis 10 Megaohm.

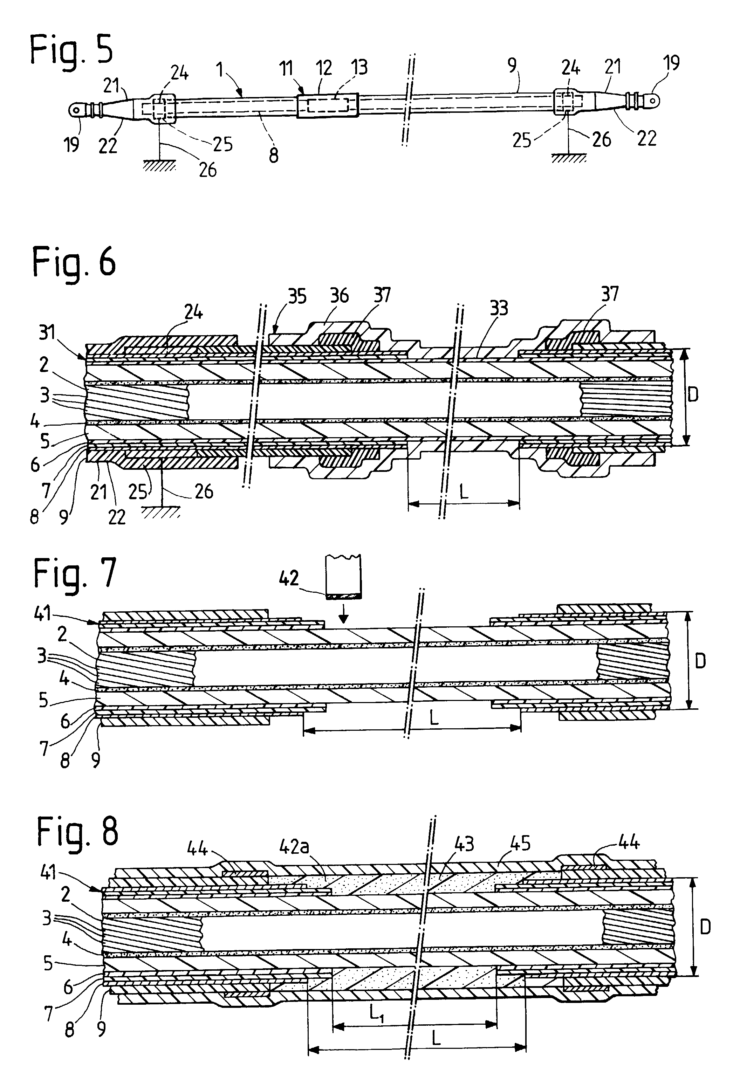

Das in der Fig. 6 ersichtliche, einadrige Kabel 31 ist ursprünglich gleich oder ähnlich wie das Kabel 1 ausgebildet und hat wie dieses - von innen nach aussen - Teile 2 bis 9. Zwischen den beiden Enden der Abschirmung 8 des Kabels 31 wurden ein Abschnitt des Isolationsmantels 9, ein vorzugsweise ein wenig kürzerer Abschnitt der Abschirmung 8 und noch ein gleich langer Abschnitt der Halbleiter-Quellhülle 7 entfernt. Dagegen wurde die Halbleiter-Teilschicht 6 der äusseren Halbleiterschicht 6, 7 beim Unterbruch der Abschirmung im Kabel belassen. Der in der Lücke zwischen den einander zugewandten Rändern der verbleibenden Abschnitte der Abschirmung vorhandene Abschnitt der Halbleiter-Teilschicht 6 bildet dann ein Widerstandselement 33. Dieses hat die Länge L.

Eine beim Unterbruch des Isolationsmantels 9 des Kabels 31 angeordnete Manschette 35 hat eine elektrisch isolierende, kalt oder heiss auf das Kabel 31 aufgeschrumpfte Hülle 36. Deren Länge ist grösser als die Länge L, so dass die Hülle 36 auf einander abgewandten Seiten des Unterbruchs des äusseren Isolationsmantels 9 an diesem anliegt. Die Hülle 36 isoliert die freigelegten Abschnitte der Abschirmung 8 und das Widerstandselement 33 elektrisch gegen die Umgebung des Kabels 31. In der Hülle 36 sind in der Nähe von deren Enden zwei ringförmige Dichtungen 37 angeordnet, welche die Hülle dicht mit dem Isolationsmantel 9 und/oder der Abschirmung 8 verbinden und den Innenraumbereich der Hülle 36, in welchem die Abschirmung entfernt wurde, gegen die Umgebung abdichten. Die Manschette 35 besass jedoch - im Gegensatz zur Manschette 11 vor dem Schrumpfen kein Widerstandsmaterial, so dass das Widerstandselement 33 eben durch einen Abschnitt der Halbleiter-Teilschicht 6 gebildet ist. Die letztere soll daher einen relativ grossen Widerstand pro Längeneinheit haben, damit das Widerstandselement 33 einen Widerstand von mindestens etwa 100 Ohm hat. Die Länge L des Widerstandselements 33 kann zur Erzielung eines ausreichend grossen Widerstands nötigenfalls grösser bemessen werden als die Länge L des Widerstandselements 13 und zum Beispiel bis 1 m oder eventuell noch mehr betragen.

Das zum Teil in der Fig. 7 gezeichnete und mit 41 bezeichnete, einadrige Kabel ist ursprünglich gleich wie das Kabel 1 ausgebildet und hat wiederum - von innen und aussen - einen Leiter 2, eine innere Halbleiterschicht 4, eine Isolationsschicht 5, eine aus einer Halbleiter-Teilschicht 6 sowie eine Halbleiter-Quellhülle 7 bestehende, äussere Halbleiterschicht 6, 7, eine metallische Abschirmung 8 und einen Isolationsmantel 9. Für die Verwendung des Kabels 41 entfernt man analog wie beim Kabel 1 die Isolationsschicht 5 im Querschnitt umschliessenden Längsabschnitte des Isolationsmantels 9, der Abschirmung 8 und der äusseren Halbleiterschicht 6, 7. Die in der Abschirmung 8 gebildete Lücke hat die Länge L und ist zum Beispiel ein wenig länger als die in der äusseren Halbleiterschicht 6, 7 gebildete, die Länge L₁ aufweisende Lücke. Die Lücke im Isolationsmantel 9 ist noch etwas länger als diejenige in der Abschirmung 8.

In der Fig. 7 ist noch ein Band 42 angedeutet, das aus einem elektrischen Widerstandsmantel oder Halbleiter, zum Beispiel aus einem Gemisch von nicht-leitendem, organischem Material und einem leitenden Material besteht. Das Band 42 ist elastisch dehnbar und beispielsweise mindestens bei erhöhter Temperatur auch plastisch verformbar sowie fliessfähig und unter Druck vulkanisierbar. Beim Band 42 kann es sich beispielsweise um ein von der Firma Sigmaform (Schweiz) AG unter der Typenbezeichnung TSSR erhältliches Band mit einem spezifischen elektrischen Widerstand von ungefähr 3 x 10¹¹ Ω cm handeln. Das Band 42 wird um den freigelegten Abschnitt der Isolationsschicht 5 und die sich auf einander abgewandten Seiten dieses Abschnitts befindenden, freigelegten Abschnitte der äusseren Halbleiterschicht 6, 7 und der Abschirmung 8 gewikkelt. Das Band 42 bildet dann eine in der Fig. 8 mit 42a bezeichnete Wicklung, deren entlang dem Kabel aufeinanderfolgenden Windungen einander beispielsweise ungefähr halb überlappen. Die Wicklung 42a hat mindestens eine Lage einander überlappender Windungen und beispielsweise zwei oder mehr solche Lagen. Das Band 42 wird beim Wickeln gespannt und gedehnt, so dass das Band 42 in der von ihm gebildeten Wicklung 42a Druckkräfte auf sich selbst und die von der Wicklung bedeckten Flächen der Isolationsschicht 5 und der äusseren Halbleiterschicht 6, 7 ausübt. Die Wicklung 42a bildet dann zusammen mit den von ihr bedeckten Abschnitten der äusseren Halbleiterschicht 6, 7 ein in der Fig. 8 mit 43 bezeichnetes Widerstandselement, das den vorher freigelegten Abschnitt der Isolationsschicht 5 und die vorher freigelegten Abschnitte der Abschirmung 8 im Querschnitt umschliesst. Auf die an die Lücke des Isolationsmantels 9 angrenzenden Abschnitte von diesem wird ein Dichtband gewickelt, das dann zwei ringförmige Dichtungen 44 bildet. Ferner wird eine elektrisch isolierende Hülle 45, nämlich ein Schrumpfschlauch, kalt oder warm auf das Kabel 41 aufgeschrumpft. Die aufgeschrumpfte Hülle 45 deckt dann das ganze Widerstandselement 45 sowie die Dichtung 44 und sich neben den letzteren befindenden Abschnitte des Isolationsmantels 9 gegen die Umgebung ab. Die Hülle 45 übt beim und nach dem Aufschrumpfen einen Druck auf das Widerstandselement 43 aus. Die vom letzteren selbst und von der Hülle 45 erzeugten Drücke bewirken eine plastische Verformung des den Hauptteil des Widerstandselements bildenden Bands 42, so dass die Wicklung 42a und das ganze Widerstandselement 43 beim fertigen Kabel analog wie des Widerstandselements 13 im wesentlichen kompakt sowie im wesentlichen porenfrei sind und das Widerstandselement 43 dicht an der Isolationsschicht 5, der äusseren Halbleiterschicht 6, 7 und der Abschirmung 8 anliegt. Die verschiedenen Windungen der Wicklung 42a können bei diesem Vorgang gewissermassen durch Vulkanisieren miteinander verbunden werden. Die aufgeschrumpfte Hülle 45 isoliert das Widerstandselement 43 und die vorher freigelegten Abschnitte der Abschirmung 8 vollständig gegen die Umgebung des Kabels. Zudem schliessen die Dichtungen 44 und die Hülle 45 die vorher freigelegten Abschnitte der Isolationsschicht 5, der äusseren Halbleiterschicht 6, 7 und der Abschirmung 8 sowie das Widerstandselement gasdicht gegen die Umgebung ab.

Der elektrische Widerstand des die Lücke der Abschirmung 8 überbrückenden Teils des Widerstandselements 43 wird durch die Widerstände der Wicklung 42a und der von der Wicklung bedeckten Abschnitten der äusseren Halbleiterschicht 6, 7 bestimmt, wobei die letztgenannten Abschnitte zu den sie bedeckenden Abschnitten der Wicklung elektrisch parallel geschaltet sind. Die Wicklung 42a hat einen elektrischen Widerstand pro Längeneinheit, der sehr viel grösser als derjenige der äusseren Halbleiterschicht 6, 7 ist. Der elektrische Widerstand des Widerstandselementes 43 ist daher zum grössten Teil durch den elektrischen Widerstand des sich im Längsbereich der Lücke der äusseren Halbleiterschicht 6, 7 befindenden, die Länge L₁ aufweisenden Abschnitts der Wicklung 42a bestimmt. Die Länge L₁ beträgt zum Beispiel ungefähr 10 cm bis 20 cm. Die Länge L ist zum Beispiel ungefähr 2 cm bis 5 cm grösser als die Länge L₁ und beträgt zum Beispiel bis 20 cm oder bis 25 cm. Die radial gemessene Dicke der Wicklung 12a liegt etwa im Bereich von 2 mm bis 5 mm. Der elektrische Widerstand des Widerstandselements 43 liegt zum Beispiel im Bereich von 10¹¹ Ω bis 10¹⁴ Ω.

Im übrigen werde der Leiter 2 der Kabel 31 und 41 analog wie beim Kabel 1 an beiden Enden mit einem nicht ersichtlichen Anschluss verbunden. Ferner wird die Abschirmung 8 der Kabel 31, 41 analog wie diejenige des Kabels 1 bei zwei Verbindungsstellen 24 in der Nähe der Kabelenden mit einem Verbindungselement 25 und einer Erdungsleitung 26 dauernd elektrisch leitend mit der Erde verbunden. Des weiteren werden die beiden Endabschnitte der Kabel 31, 41 mit einem Endverschluss 21 versehen, der eine Hülle 22 aufweist.

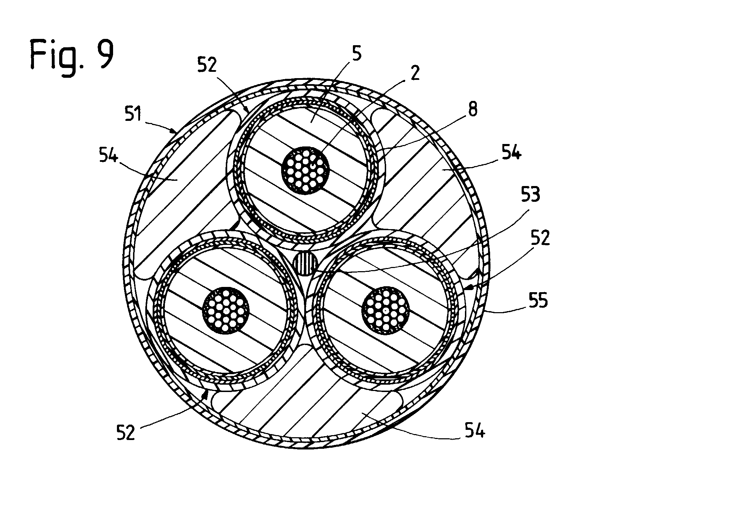

Das in der Fig. 9 ersichtliche, zum Leiten von Dreiphasen-Strom bestimmte dreiadrige Mehrfach-Kabel 51 besitzt drei je eine Ader bildende, einadrige Kabel 52. Jedes von diesen ist gleich oder ähnlich wie das Kabel 1 oder 31 oder 41 ausgebildet und besitzt insbesondere einen Leiter 2, eine Isolationsschicht 5 sowie eine Abschirmung 8. Die drei Kabel 52 sind zum Beispiel miteinander verseilt bzw. verdrillt. Das Mehrfach-Kabel 51 kann ferner eine in der Mitte zwischen den drei Kabeln 52 angeordnete Blindader 53 und drei Blindadern 54 aufweisen, von denen jede zwischen zwei Kabeln 52 angeordnet ist. Die Blindadern 53, 54 bestehen aus einem elektrisch isolierenden Material, nämlich einem thermoplastischen Kunststoff, wie Polyvinylchlorid, Polypropylen und/oder Polyäthylen. Das Mehfach-Kabel 51 weist ferner einen Mantel 55 auf, der die drei Kabel 52 und die Blindadern 53, 54 im Querschnitt umhüllt und zusammenhält. Der Mantel 55 besteht zum Beispiel aus einem wendelförmigen, um die Kabel 52 sowie die Blindadern 53, 54 herum gewickelten Band und einer auf die Aussenfläche der vom Band gebildeten Bandage aufgetragenen Schicht aus einem thermoplastischen Kunststoff, beispielsweise einem Polyäthylen- und/oder Polyamid-Derivat. Ferner kann eventuell noch eine nicht gezeichnete, den Mantel 55 im Querschnitt umschliessende, metallische Umhüllung vorhanden sein.

Die metallische Abschirmung 8 von jedem Kabel 52 hat zwei durch eine Lücke voneinander getrennte Abschnitte, die durch ein Widerstandselement elektrisch leitend miteinander verbunden sind. Das Widerstandselement der drei Kabel 52 kann dabei analog wie das Widerstandselement 13 oder 33 oder 43 ausgebildet sein. Die Abschirmung 8 jedes Kabels 52 wird bei sich in der Nähe von dessen Enden befindenden Verbindungsstellen dauernd elektrisch leitend mit der Erde verbunden.

Die Kabel können noch auf andere Arten modifiziert werden. Der bzw. jeder Leiter 2 könnte zum Beispiel eventuell nur aus einem einzigen Draht bestehen.

Die Abschirmung 8 könnte statt aus einem Rohr bzw. Schlauch zum Beispiel auch durch eine wendelförmig um die Quellhülle 7 herum gewickeltes, zum Beispiel aus Kupfer oder Aluminium bestehendes Band und eine eine Anzahl um dieses herum verteilte, ebenfalls wendelförmige Drähte aus Kupfer oder Aluminium gebildet sein. Ferner könnte die Abschirmung eventuell durch miteinander verflochtene Drähte und/oder Metallbänder gebildet sind. Die Abschirmung ist jedoch vorzugsweise derart ausgebildet, dass sie die von ihr im Querschnitt umschlossene Fläche im wesentlichen vollständig bedeckt. Wenn die Abschirmung eine Anzahl Drähte aufweist, kann das Verbindungselement 25 dann statt durch eine Bride eventuell durch Abschnitte der Drähte der Abschirmung gebildet sein. Diese Draht-Abschnitte können dann miteinander verdrillt sein und vom Kabel wegragen.

Man kann auch ein bereits mit Endverschlüssen versehenes Kabel mit einem Widerstandselement ausrüsten. Dieses kann zum Beispiel wie das Widerstandselement 33 durch einen Abschnitt der Halbleiter-Teilschicht 6 oder wie das Widerstandselement 43 durch Umwickeln des Kabels mit einem aus Widerstandsmaterial bestehenden Band 42 gebildet werden. Ferner wird dann zum Beispiel eine Manschette mit einer elektrisch isolierenden Hülle und einem Verschluss bereitgestellt. Die Hülle ist bei einer Umfangs-stelle entlang ihrer ganzen axialen Ausdehnung unterbrochen. Die an den Unterbruch angrenzenden Hüllenabschnitte sind bei offenem Verschluss voneinander getrennt. Die Hülle wird bei offenem Verschluss in einer quer zum Kabel verlaufenden Schieberichtung auf dieses aufgeschoben, so dass sie das vorher auf das Kabel aufgebrachte Widerstandselement bedeckt und bei beiden Enden über dieses herausragt. Dann wird die Hülle beim vorher offenen Unterbruch mit dem Verschluss geschlossen, so dass die vorher durch den Unterbruch getrennten Hüllenabschnitte aneinander anstossen oder einander überlappen und fest miteinander verbunden sind. Danach wird die Hülle beispielsweise heiss geschrumpft.

Ferner kann man Merkmale der verschiedenen beschriebenen Verfahren miteinander kombinieren und beispielsweise beim Kabel und für die Bildung des Widerstandselements analog wie beim Kabel 41 auch noch Abschnitte der äusseren Halbleiterschicht 6, 7 freilegen, so dass die Lücke zwischen den getrennten Längsabschnitten der Abschirmung ein wenig länger ist als die Lücke zwischen den Abschnitten der äusseren Halbleiterschicht 6, 7. Umgekehrt kann man beim Kabel 41 gleich lange Abschnitte der Abschirmung 8 und der äusseren Halbleiterschicht 6, 7 entfernen, so dass L₁ = L wird.

## Patentansprüche

1. Verfahren zum Erden einer metallischen Abschirmung (8) eines elektrischen Kabels (1, 31, 41, 51), das im Querschnitt von innen nach aussen einen Leiter (2), eine Isolationsschicht (5) sowie die Abschirmung (8) aufweist und insbesondere für eine elektrische Nenn-Spannung von mindestens 1 kV vorgesehen ist, wobei die Abschirmung (8) bei zwei sich in der Nähe der Enden des Kabels (1, 31, 51) befindenden Verbindungsstellen (24) elektrisch leitend mit der Erde verbunden wird, zwischen den beiden Verbindungsstellen (24) ein die Isolationsschicht (5) im Querschnitt umschliessender Abschnitt der Abschirmung (8) entfernt wird und der vorher im Querschnitt vom genannten Abschnitt der Abschirmung (8) umschlossene Abschnitt der Isolationsschicht (5) im Kabel (1, 31, 41, 51) verbleibt, dadurch gekennzeichnet, dass die durch Entfernen eines Abschnitts der Abschirmung (8) entstehende Lücke elektrisch leitend durch ein Widerstandselement (13, 33, 43) überbrückt wird oder bleibt, dessen elektrischer Widerstand grösser ist als der elektrische Widerstand der Abschirmung (8).

2. Verfahren nach Anspruch 1, dadurch gekennzeichnet, dass die Abschirmung (8) und das Widerstandselement (13, 33, 43) sich zwischen den beiden Verbindungsstellen (24) von elektrischen, vom Kabel (1, 31, 52) wegführenden Verbindungen freigehalten werden.

3. Verfahren nach Anspruch 1 oder 2, dadurch gekennzeichnet, dass ein Kabel (1, 31, 41, 52) mit einem die Abschirmung (8) im Querschnitt umschliessenden, elektrisch isolierenden Isolationsmantel (9) verwendet wird und dass das Widerstandselement (13, 43, 33) aussen mit einer elektrisch isolierten Hülle (12, 36, 45) bedeckt wird, so dass die Abschirmung (8) und das Widerstandselement (13, 33, 43) zwischen den beiden Verbindungsstellen (24) entlang dem Kabel (1, 31, 41, 52) unterbruchslos gegen die Umgebung des Kabels (1, 31, 41, 52) elektrisch isoliert werden, wobei das Widerstandselement (13, 33, 43) vorzugsweise dicht gegen die Umgebung abgeschlossen wird.

4. Verfahren nach einem der Ansprüche 1 bis 3, dadurch gekennzeichnet, dass nach dem Entfernen des Abschnitts der Abschirmung (8) mindestens im Längsbereich der Lücke ein zur Bildung des Widerstandselements (13, 43) dienendes Widerstandsmaterial auf das Kabel (1, 41) aufgebracht wird.

5. Verfahren nach einem der Ansprüche 1 bis 4, dadurch gekennzeichnet, dass ein Kabel 1, 41) verwendet wird, das eine die Isolationsschicht (5) im Querschnitt umschliessende, zwischen dieser und der Abschirmung (8) angeordnete, elektrisch leitende Schicht (6, 7) besitzt, deren elektrischer Widerstand pro Längeneinheit wesentlich grösser ist als der elektrische Widerstand pro Längeneinheit der Abschirmung (8), und dass bei der Bildung der Lücke der Abschirmung (8) auch ein Längsabschnitt der leitenden Schicht (6, 7) entfernt und die dabei entstehende Lücke der leitenden Schicht (6, 7) danach ebenfalls durch das Widerstandselement (13, 43) überbrückt wird.

6. Verfahren nach einem der Ansprüche 1 bis 5, dadurch gekennzeichnet, dass nach dem Entfernen des Längsabschnitts der Abschirmung (8) eine elektrisch isolierende Hülle (12), die innen mit einem fliessfähigen, elektrischen Widerstandsmaterial versehen ist, derart auf das Kabel (1) aufgeschoben wird, dass die Hülle (12) mindestens die Lücke der Abschirmung (8) bedeckt, und dass die Hülle (12) danach geschrumpft wird, so dass das Widerstandsmaterial mindestens einen wesentlichen Teil des Widerstandselementes (13) bildet, wobei das Widerstandsmaterial vorzugsweise eine elektrisch isolierende, fliessfähige Matrix aufweist, in der elektrisch leitende Teilchen enthalten sind, die zum Beispiel aus Kohlenstoff bestehen.

7. Verfahren nach einem der Ansprüche 1 bis 5, dadurch gekennzeichnet, dass nach dem Entfernen des Längsabschnitts der Abschirmung (8) ein Band (42) aus elektrischem Widerstandsmaterial derart um einen Längsabschnitt des Kabels (41) gewikkelt wird, dass es mindestens einen wesentlichen Teil des Widerstandselements (43) bildet und dass das letztere danach elektrisch gegen die Umgebung des Kabels (41) isoliert wird.

8. Verfahren nach einem der Ansprüche 1 bis 7, dadurch gekennzeichnet, dass die durch das Widerstandselement (13, 33, 43) überbrückte Lücke der Abschirmung (8) eine mindestens 5 cm betragende Länge L hat, wobei die Abschirmung (8) vorzugsweise im Querschnitt im wesentlichen kreisförmig ist sowie einen äusseren Durchmesser D hat und die Länge L vorzugsweise mindestens gleich dem Durchmesser D und beispielsweise mindestens gleich dem zweifachen Durchmesser D ist.

9. Verfahren nach einem der Ansprüche 1 bis 8, dadurch gekennzeichnet, dass der elektrische Widerstand pro Längeneinheit des Widerstandselements (13, 33, 43) mindestens 100-mal und vorzugsweise mindestens 1000-mal grösser ist als der Widerstand pro Längeneinheit der Abschirmung (8).

10. Verfahren nach einem der Ansprüche 1 bis 9, dadurch gekennzeichnet, dass das Widerstandselement (13, 33, 43) aus mindestens einem Material gebildet wird, dessen Dielektrizitätskonstante mindestens gleich derjenigen der Isolationsschicht (5) ist, wobei die letztere vorzugsweise aus Polyäthylen besteht.

11. Verfahren nach einem der Ansprüche 1 bis 9, dadurch gekennzeichnet, dass zum Leiten von Dreiphasen-Strom noch zwei andere Kabel (52) neben dem genannten Kabel (52) angeordnet werden und dass die Abschirmungen (8) und die Widerstandselemente (13, 33, 43) der drei Kabel (52) zwischen den Verbindungsstellen (24) elektrisch vollständig voneinander getrennt bleiben und höchstens bei den Verbindungsstellen (24) elektrisch leitend miteinander verbunden werden.

12. Elektrisches Kabel, insbesondere für eine elektrische Nenn-Spannung von mindestens 1 kV, das im Querschnitt von innen nach aussen einen elektrischen Leiter (2), eine Isolationsschicht (5) und eine metallische Abschirmung (8) aufweist, die bei zwei sich in der Nähe der Enden des Kabels befindenden Verbindungsstellen (24) elektrisch leitend mit der Erde verbindbar ist, wobei die Abschirmung (8) zwischen den beiden Verbindungsstellen (24) eine die Isolationsschicht (5) im Querschnitt umschliessende Lücke aufweist und sich die Isolationsschicht (5) zusammenhängend durch den von der Lücke eingenommenen Längsabschnitt des Kabels erstreckt, dadurch gekennzeichnet, dass die Lücke der Abschirmung (8) elektrisch leitend durch ein Widerstandselement (13, 33, 43) überbrückt ist, dessen elektrischer Widerstand grösser ist als der elektrische Widerstand der Abschirmung (8).

13. Kabel nach Anspruch 12, dadurch gekennzeichnet, dass die Abschirmung (8) und das Widerstandselement (13, 33, 43) zwischen den beiden Verbindungsstellen (24) frei von vom Kabel wegführenden Verbindungen sind.

14. Kabel nach Anspruch 12 oder 13, dadurch gekennzeichnet, dass die Abschirmung (8) und das Widerstandselement (13, 33, 43) zwischen den beiden Verbindungsstellen (24) entlang dem Kabel unterbruchslos gegen dessen Umgebung elektrisch isoliert sind.

15. Kabel nach einem der Ansprüche 12 bis 14, dadurch gekennzeichnet, dass die Abschirmung (8) im Querschnitt im allgemeinen kreisförmig ist und einen äusseren Durchmesser D hat und dass die Länge L der vom Widerstandselement (13, 33, 43) überbrückten Lücke der Abschirmung (8) mindestens 5 cm lang ist.
